# EUROPEAN PATENT APPLICATION

(11) **EP 2 149 866 A1**
(43) Date of publication of application: **03.02.2010**
(21) Application number: 08752988.9
(22) Date of filing: 20.05.2008
(51) Int. Cl.: G09F 9/00, H04N 5/64, H04N 5/66

(54) **DISPLAY DEVICE**

(30) Priority: 23.05.2007 JP 2007137110
(71) Applicant: Sony Corporation, Tokyo 108-0075 (JP)
(72) Inventor: SAKATA, Tatsuya, Tokyo 108-0075 (JP); MIYASHITA, Makoto, Tokyo 108-0075 (JP); TAKAHASHI, Toyoki, Tokyo 141-0031 (JP); ADACHI, Daiki, Tokyo 141-0031 (JP); KOYAMA, Sachiko, Tokyo 141-0031 (JP)
(74) Representative: Forsythe, Dominic
(86) International application number: PCT/JP2008/059192
(87) International publication number: WO 2008/143238

(57) **Abstract**

There is provided a display apparatus including: a main body stand unit; a display panel in a planar shape arranged with a display screen; at least one hinge plate connected to a back surface of the display panel; a shaft arranged to extend along a lower end portion of the display panel, wherein the hinge plate is pivotably attached to a central axis of the shaft; a support unit, wherein an upper end of the support unit is connected to the shaft, and a lower end of the support unit is connected to the main body stand unit, so that the support unit supports the display panel in a cantilever manner; and pivotable range limiting units arranged at each of both end portions of the shaft for limiting a pivotable range of the hinge plate evenly at the both end portions.

## Description

### TECHNICAL FIELD

The present invention relates to a display apparatus.

### BACKGROUND ART

Regarding a conventional structure for supporting a display panel on which a screen of a display apparatus is arranged, for example, Japanese Patent Application Laid-Open No. 11-102235 describes a known structure for a notebook-type personal computer, in which support units are arranged on both ends of a main body unit arranged with a keyboard, and the support units pivotably support a display panel at two positions of both widthwise ends of the display panel.

A liquid crystal display panel for a desktop-type personal computer and the like is generally arranged with a support arm extending upward from a main body unit of the liquid crystal display panel placed on a tabletop so that a widthwise central portion of the liquid crystal display panel is supported by the support arm.

### CITATION LIST

[Patent Literature 1] Japanese Patent Application Laid-Open No. 11-102235

### DISCLOSURE OF INVENTION

### TECHNICAL PROBLEM

However, since the above conventional display apparatus is structured to support the display panel at the center in the widthwise direction or at both ends, the structural unit connecting the main body unit and the display panel via the support unit inevitably comes into view when a user sees the display panel. Therefore, although the user originally wants to concentrate on the display screen, the support structure extending from the display panel to the main body unit via the support unit comes into view. Therefore, since the redundant structural object comes into view of the user, the user cannot concentrate on the display screen when the user sees the display screen.

Further, the support unit arranged in the center of the display panel or at both ends of the display panel reduces the flexibility in the arrangement of the support unit relative to the main body unit or the display panel. When operation buttons are arranged on the main body unit, the position of the support unit may impose limitation on the arrangement of the operation buttons.

Therefore, in order to prevent the structural object other than the display screen from coming into view of the user as much as possible, a following new support structure may be considered the display panel is supported in a cantilever manner by arranging the support unit of the display apparatus displaced from the central portion in the lateral direction of the display panel.

In order to support the display panel in a cantilever manner, it is necessary to improve the stiffness of the support unit to reliably support the weight of the display panel. Further, in order to improve the viewability of the display screen, it is necessary to arrange a tilt adjustment mechanism of the display panel. However, when the display panel is supported in a cantilever manner and the tilt adjustment mechanism is arranged on the support unit, there is a problem in that, due to the cantilever structure, a force is exerted in a twisting direction of the display panel at a tilt lock position, so that the display panel slants. Accordingly, it is difficult to reliably limit a pivotable range of the display panel in such a manner that the twist is reduced at the tilt lock position.

The present invention is made in view of the above problems, and it is the object of the present invention to provide a novel and improved display apparatus capable of reliably limiting a pivotable range of a display panel when a display unit is reliably supported in a cantilever manner and when a tilt position can be adjusted by pivoting the display panel.

### SOLUTION TO PROBLEM

In order to solve the above problem, according to an aspect of the present invention, there is provided a display apparatus including: a main body stand unit; a display panel in a planar shape arranged with a display screen; at least one hinge plate connected to a back surface of the display panel; a shaft arranged to extend along a lower end portion of the display panel, wherein the hinge plate is pivotably attached to a central axis of the shaft; a support unit, wherein an upper end of the support unit is connected to the shaft, and a lower end of the support unit is connected to the main body stand unit, so that the support unit supports the display panel in a cantilever manner; and a pivotable range limiting unit arranged at each of both end portions of the shaft for limiting a pivotable range of the hinge plate evenly at the both end portions.

In such configuration, the hinge plate is made of at least one hinge plate, and is connected to the back surface of the display panel. The shaft is arranged to extend along the lower end portion of the display panel, and the hinge plate is attached such that the hinge plate can pivot about the central axis of the shaft. The upper end of the support unit is connected to the shaft, and the lower end thereof is connected to a main body stand unit. The pivoting range limiting unit is arranged on both end portions of the shaft so as to limit the pivot range of the hinge plate evenly at both end portions of the shaft. Therefore, since the shaft arranged to extend along the lower end portion of the display unit is integrally formed with the support unit as a stiffening member, the hinge plate attached to the shaft can reliably support the display panel in a cantilever manner. Since the hinge plate is pivotably attached to the shaft, the tilt position of the display panel can be adjusted. Further, when the display unit is pivoted, the pivot range limiting unit limits the pivot range of the hinge plate such that the pivot range is the same at both end portions of the shaft. Therefore, when the display panel is supported in a cantilever structure, no force is exerted on the display panel in a twisting direction at the tilt lock position, so that the display panel is prevented from slanting.

The pivotable range limiting unit may include an contact unit which contacts the hinge plate to limit the pivotable range of the hinge plate, and a positioning unit being engaged with the shaft at the both end portions of the shaft to limit an angular position of the contact unit relative to the shaft. In such configuration, a positioning unit limits an angular position of an contact unit relative to the shaft to a predetermined position at both end portions of the shaft, and therefore, the pivotable range of the hinge plate can be limited evenly at both end portions of the shaft.

The hinge plate may be divided into at least two or more hinge plates. In such configuration, at least two or more hinge plates are arranged, and each of the divided hinge plates is connected to the back surface of the display unit and is connected to the shaft so as to be pivotable about the central axis of the shaft. Therefore, the stiffness of each of the hinge plates is improved, and a twist of the hinge plate can be reduced.

The shaft may include at least two or more divided shafts so as to correspond to the divided hinge plates, and the divided shafts may be connected to each other in such a manner that the divided shafts cannot pivot about the central axis of the shaft. In such configuration, since the divided shafts are connected to each other such that the divided shafts cannot pivot relative to each other, the positioning unit of the pivotable range limiting unit limits the angular position of the contact unit relative to the shaft to the predetermined position at both end portions of the shaft, and therefore, the pivotable range of the hinge plate can be limited evenly at both end portions of the shaft.

### ADVANTAGEOUS EFFECTS OF INVENTION

According to the present invention, when the display unit is reliably supported in a cantilever manner, and the tilt position can be adjusted by pivoting the display panel, the pivotable range of the display panel can be reliably limited.

### BRIEF DESCRIPTION OF DRAWINGS

FIG. 1 is a schematic perspective view showing an external appearance of a display apparatus according to one embodiment of the present invention;
FIG. 2 is a schematic perspective view showing the display apparatus when the display apparatus is seen from the left side in the front;
FIG. 3 is a schematic view showing a configuration of an arm unit;
FIG. 4 is a schematic view showing the configuration of the arm unit in detail;
FIG. 5 is a schematic view showing a configuration of a cover of the arm unit in detail;
FIG. 6 is an exploded perspective view showing a configuration of a display unit;
FIG. 7 is a plan view showing a configuration of a base plate;
FIG. 8 is a schematic view showing a configuration of a rear cover;
FIG. 9 is a schematic view showing a configuration of a T cover;
FIG. 10 is a schematic view showing the display apparatus from which the T cover is removed when the display apparatus is seen from the back;
FIG. 11 is a schematic view showing the display apparatus of FIG. 10 from which the rear cover and a bezel are removed;
FIG. 12 is a perspective view showing a configuration of a hinge unit;
FIG. 13 is a perspective view showing the configuration of the hinge unit in detail;
FIG. 14 is a schematic view showing a configuration of a shaft in detail;
FIG. 15 is a schematic view showing an engagement state among a first hinge plate, a second hinge plate, and the shaft;
FIG. 16 is a schematic view showing a configuration of a lock position limiting plate;
FIG. 17 is a schematic view showing how pivoting positions of the first hinge plate and the second hinge plate are limited by the lock position limiting plate;
FIG. 18 is a schematic view showing another example of the configuration of shafts; and
FIG. 19 is an exploded schematic view showing a schematic configuration of a main body stand unit.

### REFERENCE SINGS LIST

- 1000: display apparatus
- 100: main body stand unit
- 200: arm unit
- 300: display unit
- 320: display panel
- 360: hinge unit
- 362: first hinge plate
- 362a, 362b, 364a,364b: engaging portion
- 362c, 364c: penetrating hole
- 362d, 364d: concave portion
- 362e, 364e: end surfaces
- 364: second hinge plate
- 366, 368, 370: shaft
- 372: flat surface
- 380: lock position limiting plate
- 380a: hole
- 380b, 380c: protrusion

### BEST MODE FOR CARRYING OUT THE INVENTION

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

### [Entire Configuration of Display Apparatus]

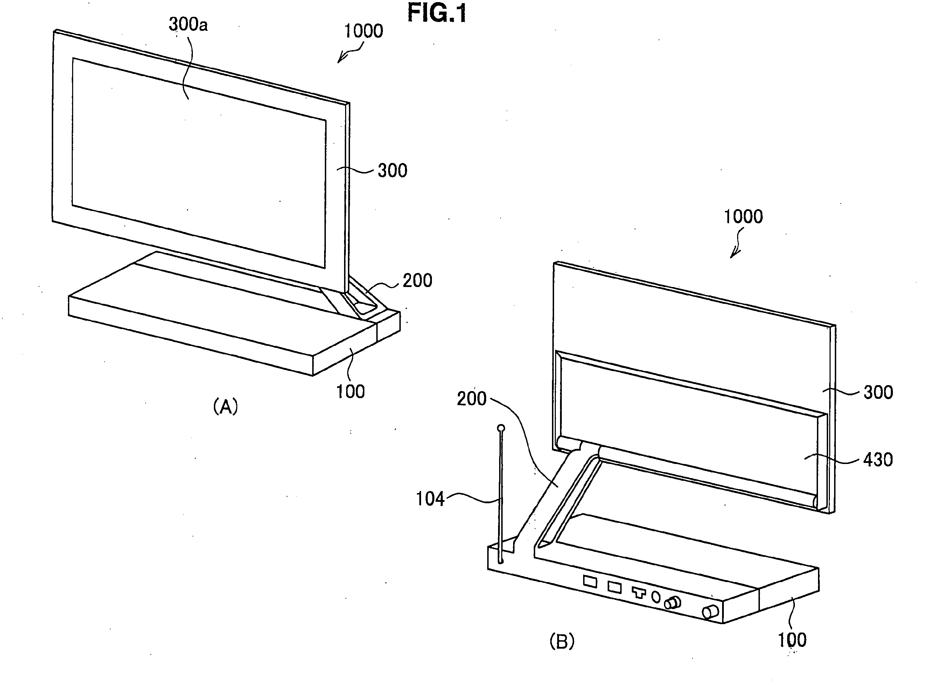

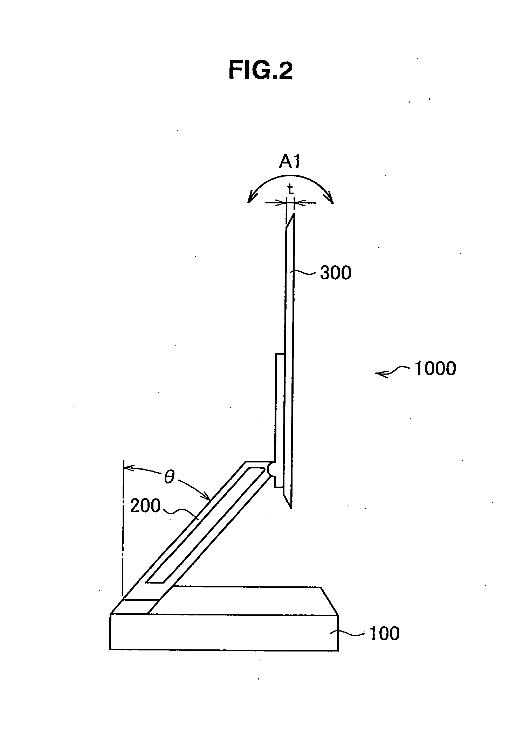

FIG. 1 is a schematic perspective view showing an external appearance of a display apparatus 1000 according to one embodiment of the present invention. FIG. 1(A) is a schematic perspective view showing the display apparatus 1000 when the display apparatus 1000 is seen from the upper right in the front. FIG. 1(B) is a perspective view showing the display apparatus 1000 when the display apparatus 1000 is seen from the upper right in the back. FIG. 2 is a schematic perspective view showing the display apparatus 1000 when the display apparatus 1000 is seen from the left side in the front.

As shown in FIGS. 1 and 2, the display apparatus 1000 according to the present embodiment includes a main body stand unit 100, an arm unit (support unit) 200, and a display unit 300. For example, the display apparatus 1000 receives, for example, an image of television broadcast and displays the image on a display screen 300a of the display unit 300.

The display unit 300 has a display panel (organic EL panel) 320 for displaying an image by using organic electro luminescence (Electro Luminescence, EL) phenomenon. The organic EL panel 320 includes a plurality of organic EL elements, i.e., light emitting elements, and the thickness thereof is sufficiently thin since no backlight or the like is needed. As shown in FIG. 2, the display unit 300 according to the present embodiment is configured such that the thickness t thereof is kept to several millimeters (approximately 3 mm) or less, and the display unit 300 is a very thin panel.

The arm unit 200 is arranged at one position in the back of the main body stand unit 100 to extend upward from the main body stand unit 100. When the display apparatus 1000 is seen from the front, the arm unit 200 is arranged on the right side with respect to the center in the lateral direction (horizontal direction) of the main body stand unit 100, and is connected to the right side with respect to the center in the lateral direction of the display unit 300. In this way, the display apparatus 1000 according to the present embodiment has the arm unit 200 arranged on right or left end side with respect to the center in the horizontal direction of the display unit 300 so as to support the display unit 300 in a cantilever manner.

A liquid crystal display requires backlights. Accordingly, the thickness of the display unit increases, and the weight thereof also increases. In particular, when the liquid crystal display is assumed to be used not as a computer display but as a display for displaying a television image, the liquid crystal display needs to be arranged with more backlights than those of the computer display in order to obtain the quality as the television receiver. Further, the liquid crystal display needs an inverter for controlling the backlights in addition to the backlights. Accordingly, the liquid crystal display is heavy, and in order to support the display unit in a cantilever manner, it is necessary to greatly improve the stiffness of the display unit including the arm unit. Therefore, the structure is expected to become more complicated, and the weight is expected to become heavier. Therefore, it is not realistic to support the liquid crystal display in a cantilever manner, when convenience of users, manufacturing cost, and the like are taken into consideration.

On the other hand, since the organic EL panel is made of organic EL elements, i.e., light emitting elements, constituent members such as backlights and an associated inverter are not necessary, and the organic EL element can be made with only a thin glass panel to be made light. Therefore, according to the present embodiment, the display unit 300 itself can be made very light, and the display unit 300 can be supported in a cantilever manner.

The display unit 300 can pivot about a connecting unit connecting with the arm unit 200 in a direction shown by an arrow A1 in FIG. 2, and the user can set the tilt position of the display unit 300 to a desired angle.

In a one-point supported conventional display panel, a member supporting the display panel supports a central portion in the lateral direction of the display panel from below. In a two-point supported conventional display panel, the display panel is supported from below at near both ends in the lateral direction of the display panel. In the present embodiment, the arm unit 200 is arranged to be displaced from the central portion in the lateral direction of the display unit 300 so as to support the display unit 300 in a cantilever manner. Therefore, the arm unit 200 is out of view of the user, so that the display screen 300a can be independently recognized by the user. Accordingly, the user can perceive the display unit 300 as being floating above the main body stand unit 100 without the arm unit 200. Therefore, the display unit 300 supported in a cantilever manner allows the user to independently concentrate on the display screen 300a.

Further, since it is not necessary to connect the base of the arm unit 200 to the center of the main body stand unit 100, the arrangement of the arm unit 200 is more flexible. Accordingly, the installation position of the arm unit 200 to the main body stand unit 100 can be determined in view of the internal structure, arrangements of substrates, and the like in the main body stand unit 100, so that the design can be more flexible. Therefore, the constituent member can be arranged most efficiently in view of the internal structure in the main body stand unit 100, and the size of the display apparatus 1000 can be reduced as much as possible. Further, since the arm unit 200 is not arranged in the center of the main body stand unit 100, a large usable space is available on the top surface of the main body stand unit 100. Therefore, a display unit, operation buttons, LED indicator lights, and the like can be flexibly arranged on the top surface of the main body stand unit 100.

Further, as shown in FIGS. 1 and 2, the arm unit 200 is arranged such that the arm unit 200 is inclined from the back of the main body stand unit 100 toward the back of the display unit 300. In FIG. 2, an inclination angle θ of the arm unit 200 with respect to the vertical direction is configured to be about 45 degrees to 60 degrees. Accordingly, when the display unit 300 is seen from the front, the arm unit 200 is hidden behind the display unit 300, and the arm unit 200 is prevented from being recognized in the visual field of the user. Therefore, as a result of the synergistic effect with the arm unit 200 displaced from the center of the display unit 300, the arm unit 200 can be reliably prevented from being recognized in the visual field of the user.

Therefore, since the user sees only the display unit 300 and the main body stand unit 100 in the visual field of the user, and hardly sees the arm unit 200 in the visual field, the user is prevented from directly recognizing the connection between the display unit 300 and the main body stand unit 100. Accordingly, the user perceives the display unit 300 as being floating in the space.

Further, as described above, in the configuration of the present embodiment, the display unit 300 is configured such that the thickness thereof is very thin, i.e., about several millimeters, and the user recognizes that the lightness of the display unit 300 is emphasized. Therefore, as a result of the synergistic effect with the user's perception of the display unit 300 as if the display unit 300 is floating in the space, the display unit 300 abundantly producing a sense of floating and lightness is provided.

Therefore, the user can concentrate on the displayed contents of the display unit 300 which is recognized as if floating in the space, and the user can see the displayed contents in such a manner that the user is concentrated on the displayed contents without being distracted by other structural objects. Therefore, the display apparatus 1000 can be provided, in which the user perceives the display screen 300a as being floating, wherein a good design is maintained, and the viewability of the display screen 300a is greatly improved.

### [Configuration of Arm Unit]

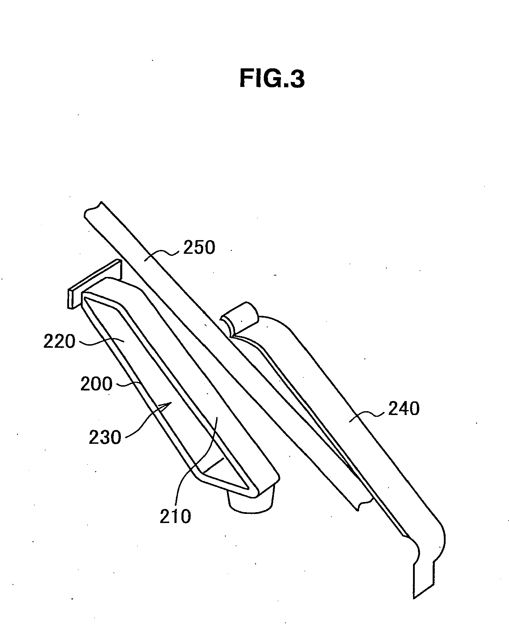

FIG. 3 is a schematic view showing a configuration of the arm unit 200. As shown in FIG. 3, the arm unit 200 has a hollow structure in which an opening 230 penetrating the side surface is formed along the longitudinal direction of the arm unit 200. As a result of this hollow structure, the arm unit 200 includes a first arm unit 210 located above and a second arm unit 220 located below. The first arm unit 210 and the second arm unit 220 are made into a thin planar shape, and face each other via the opening 230. The material thickness of the first arm unit 210 and the second arm unit 220 is kept to the minimum.

As described above, the display unit 300 is configured to be very light and abundantly producing a sense of lightness and floating. Accordingly, the arm unit 200 supporting the display unit 300 is also made such that the material thickness is kept to the minimum due to the hollow structure, so that the arm unit 200 can also be configured to abundantly produce a sense of lightness and floating, and the display apparatus 1000 as a whole can impress a sense of lightness and floating.

As described above, since a liquid crystal display is heavy, it is difficult to make a configuration producing a sense of lightness and liveliness by making an arm portion in a hollow structure when the strength needs to be secured. In the present embodiment, since the display unit 300 includes the organic EL panel 320, the required strength can be secured even when the arm unit 200 is made in the hollow structure. Therefore, the display unit 300 can be reliably supported, and the good design producing a sense of lightness and liveliness can be secured.

A cover 240 is placed on the upper surface of the first arm unit 210. A flexible print substrate 250 electrically connecting the main body stand unit 100 and the display unit 300 is accommodated between the upper surface of the first arm unit 210 and the cover 240.

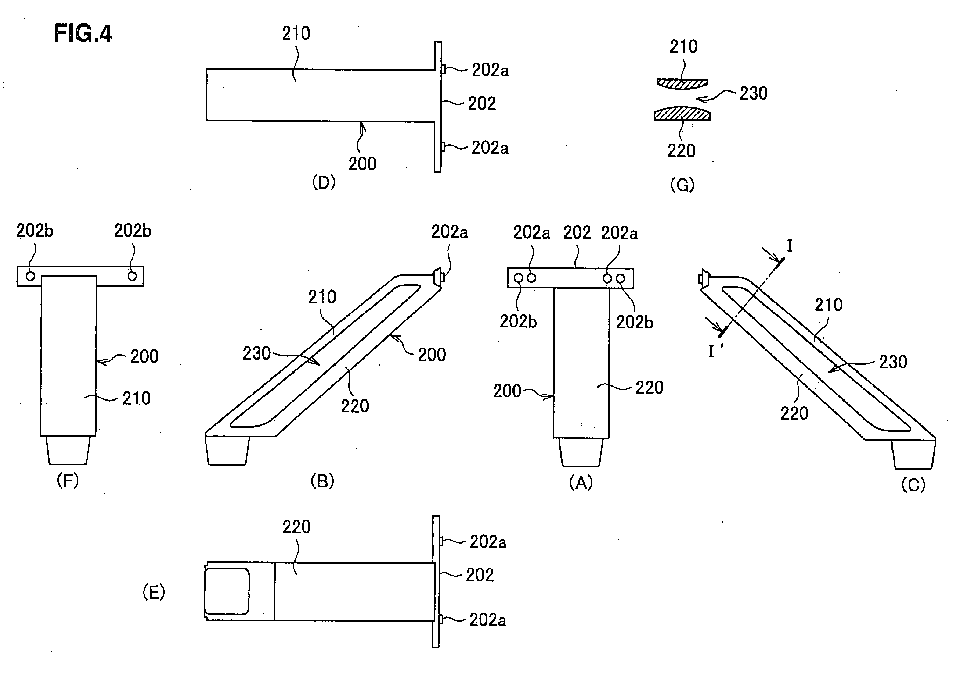

FIG. 4 is a schematic view showing the configuration of the arm unit 200 in detail. FIG. 4(A) is a front view showing the arm unit 200 when the arm unit 200 is seen from the front of the display unit 300. FIG. 4(B) is a left side view. FIG. 4(C) is a right side view. FIG. 4(D) is a top view. FIG. 4(E) is a bottom view. FIG. 4(F) is a back view. FIG. 4(G) is a cross sectional view taken along an alternate long and short dashed line I-I' in FIG. 4(C). The main body unit of the arm unit 200 without the cover 240 can be made as an integral block by casting or cutting a metal material such as aluminum.

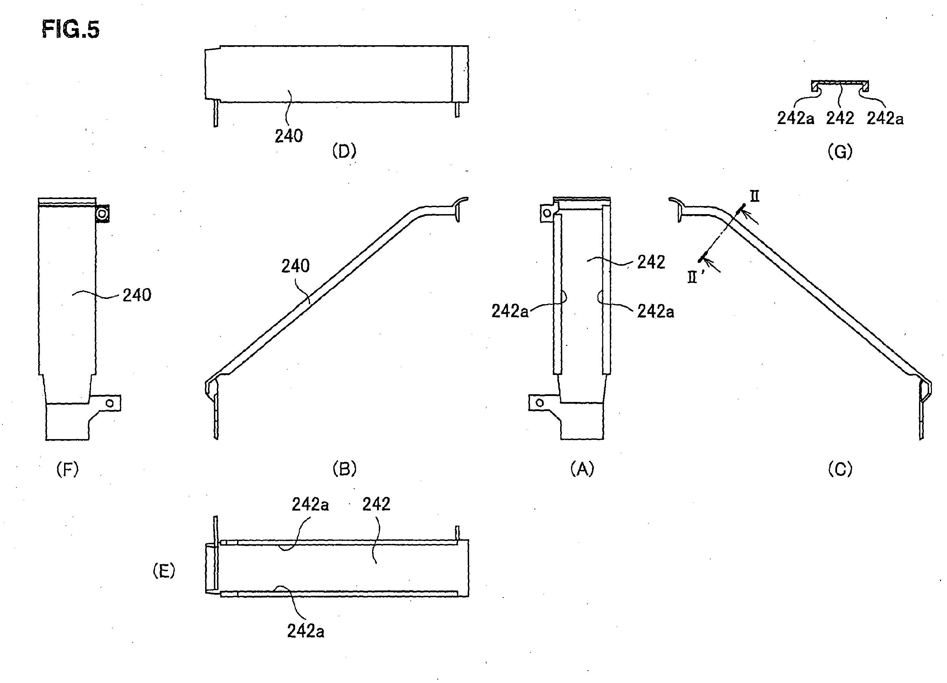

FIG. 5 is a schematic view showing a configuration of the cover 240 in detail. FIG. 5(A) is a front view showing the cover 240 when the cover 240 is seen from the front of the display unit 300. FIG. 5(B) is a left side view. FIG. 5(C) is a right side view. FIG. 5(D) is a top view. FIG. 5(E) is a bottom view. FIG. 5(F) is a back view. FIG. 5(G) is a cross sectional view taken along an alternate long and short dashed line II-II' in FIG. 5(C). As shown in FIG. 5, the cover 240 is arranged with a concave portion 242, and side walls 242a on both sides of the concave portion 242 are configured to engage with the side surfaces in the widthwise direction of the first arm unit 210. The flexible print substrate 250 is accommodated on the bottom of the concave portion 242 to be arranged between the first arm unit 210 and the cover 240. Therefore, the flexible print substrate 250 is not exposed to the outside.

As described above, the display unit 300 is made of the organic EL panel 320, so that the weight of the display unit 300 can be kept to the minimum, and the required strength can be secured even when the arm unit 200 is made in a hollow structure. Further, the volume of the arm unit 200 is kept to the minimum by making the arm unit 200 in a hollow structure, so that the arm unit 200 as well as the display unit 300 made light and thin arouse a sense of floating and liveliness in the user. Further, the flexible print substrate 250 accommodated in the first arm unit 210 achieves a structure that does not remind the user of the existence of wirings.

The arm unit 200 may include, e.g., a transparent resin material such as polycarbonate and acryl or transparent glass. The arm unit 200 made to be transparent better achieves a structure that does not remind the user of the existence of the arm unit 200. Therefore, the user can concentrate on the display screen 300a, and a sense of floating and liveliness of the display apparatus 1000 can be further aroused in the user.

### [Configuration of Display Unit]

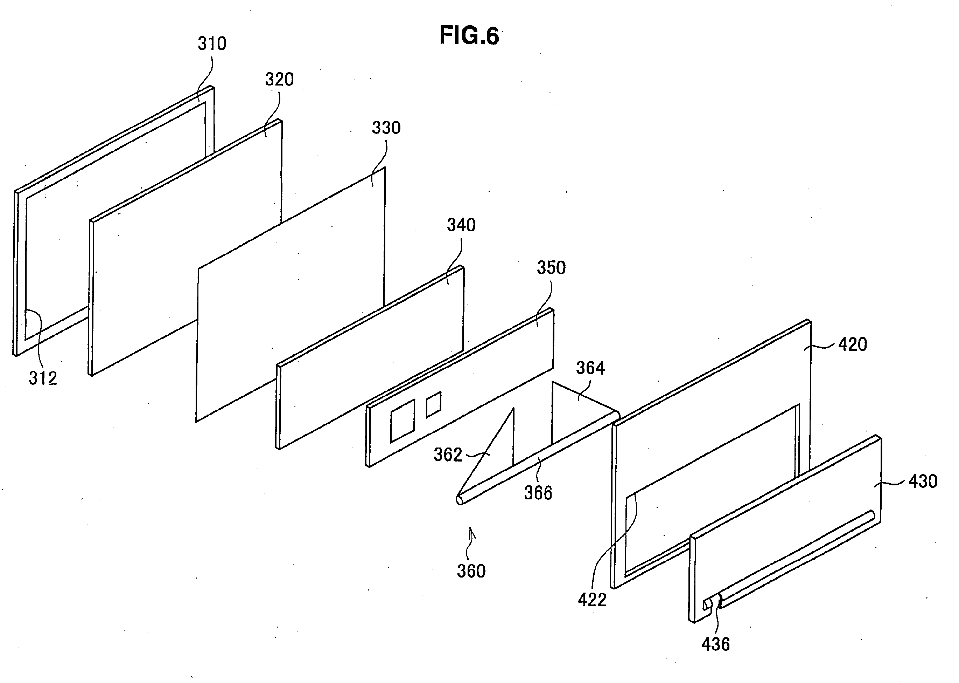

FIG. 6 is a schematic view showing the configuration of the display unit 300 to show an exploded perspective view of the display unit 300. As shown in FIG. 6, the display unit 300 includes a bezel 310, an organic EL panel 320, a graphite sheet 330, a base plate 340, a T substrate 350, a hinge unit 360, a rear cover 420, and a T cover 430.

The base plate 340 is a member constituting a major structure of the display unit 300, and the arm unit 200 is coupled to the base plate 340 via the hinge unit 360. Major constitutional members such as the organic EL panel 320, the T substrate 350, and the hinge unit 360 are fixed to the base plate 340. Major members constituting the display unit 300, such as the organic EL panel 320, the T substrate 350, the hinge unit 360, the rear cover 420, and the T cover 430, are all fixed to the base plate 340.

On the back of the organic EL panel 320, the graphite sheet 330 is pasted. The organic EL panel 320 is fixed to the base plate 340 with an adhesive tape in such a direction that the surface pasted with the graphite sheet 330 faces the base plate 340.

The T substrate 350 is made of a hard substrate, and is connected to a power line and a signal line connected to the organic EL panel 320. The size of the T substrate corresponds to the size of the base plate 340, and the T substrate 350 is fixed to a side of the base plate 340 opposite to the surface to which the organic EL panel 320 is fixed.

The hinge unit 360 is a constituent member for coupling the arm unit 200 and the base plate 340. The hinge unit 360 includes constituent members such as: a first hinge plate 362 and a second hinge plate 364 made of metal and having a planar triangular shape; a metal shaft 366; and the like. The shaft 366 is arranged horizontally along the lower end of the display unit 300. The first hinge plate 362 and the second hinge plate 364 are fixed to the base plate 340 and attached to be pivotable about the shaft 366. The shaft 366 is fixed to the arm unit 200. Therefore, the base plate 340 can pivot about the shaft 366 fixed to the arm unit 200, and in this occasion, the central axis of the pivoting is the central axis of the shaft 366. Therefore, the display unit 300 can pivot in the direction shown by arrow A1 in FIG. 2 as described above, so that the tilt angle of the display unit 300 can be changed.

The bezel 310 is attached to the edge of the organic EL panel 320, and is a member constituting the external appearance of the edge of the display unit 300. The rear cover 420 and the T cover 430 are metal covers covering the back surface of the display unit 300. The rear cover 420 is arranged with an opening 422 at a portion corresponding to the positions of the T substrate 350 and the hinge unit 360, and mainly covers the upper portion of the back surface of the display unit 300. The T cover 430 is attached at a position corresponding to the position of the opening 422, to cover the T substrate 350 and the hinge unit 360.

Either of the base plate 340, the T substrate 350, and the hinge unit 360 is arranged only in the area of the lower half of the display unit 300, and the area occupied by the base plate 340, the T substrate 350, and the hinge unit 360 is kept to the minimum relative to the area of the entire display unit 300. In an area other than the area in which the base plate 340, the T substrate 350, and the hinge unit 360 are arranged, mainly only the three members, i.e., the organic EL panel 320, the graphite sheet 330, and the rear cover 420, limit the thickness of the display unit 300. Therefore, in an area including the upper half of the display unit 300, the thickness of the display unit 300 can be made very thin, and the thickness can be reduced to about 3 mm as described above.

Since the display apparatus 1000 is usually arranged on a desktop and the like, the user seldom sees the display unit 300 from below, and the user recognizes the thickness of the display unit 300 by seeing it from above. Accordingly, the members such as the base plate 340, the T substrate 350, and the hinge unit 360 are arranged on the lower side of the display unit 300, so that the thickness of the upper side of the display unit 300 is kept to the minimum, and the thinness of the display unit 300 can be impressed on the user. Therefore, the above-described sense of floating and liveliness are produced, and the good design can be maintained.

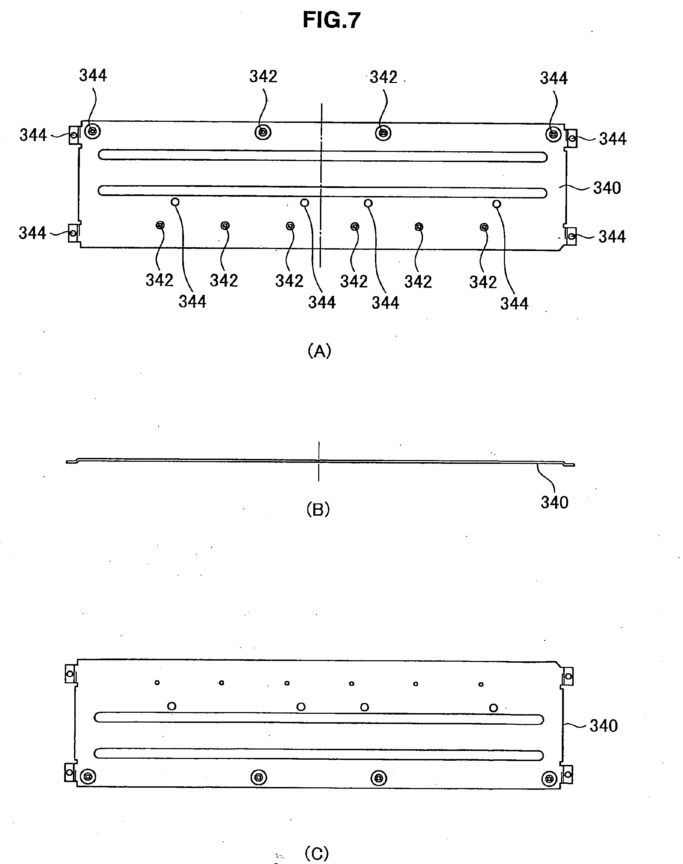

FIG. 7 is a plan view showing the configuration of the base plate 340. FIG. 7(A) is a front view of the base plate 340 when the base plate 340 is seen from the back of the display unit 300. FIG. 7(B) is a bottom view of FIG. 7(A). FIG. 7(C) is a back view of FIG. 7(A). The base plate 340 is made of a press-molded metal plate. As shown in FIG. 7, the base plate 340 is formed with a plurality of screw holes 342 and 344. The screw holes 342 are used to fix the first hinge plate 362 and the second hinge plate 364. The other screw holes 344 are used to fix constituent elements of the display unit 300 such as the T substrate 350 and the T cover 430.

The bezel 310 is fixed to the peripheral portion of the organic EL panel 320 by adhesion. As shown in FIG. 6, the bezel 310 is arranged with an opening 312 for exposing the display screen 300a of the organic EL panel 320.

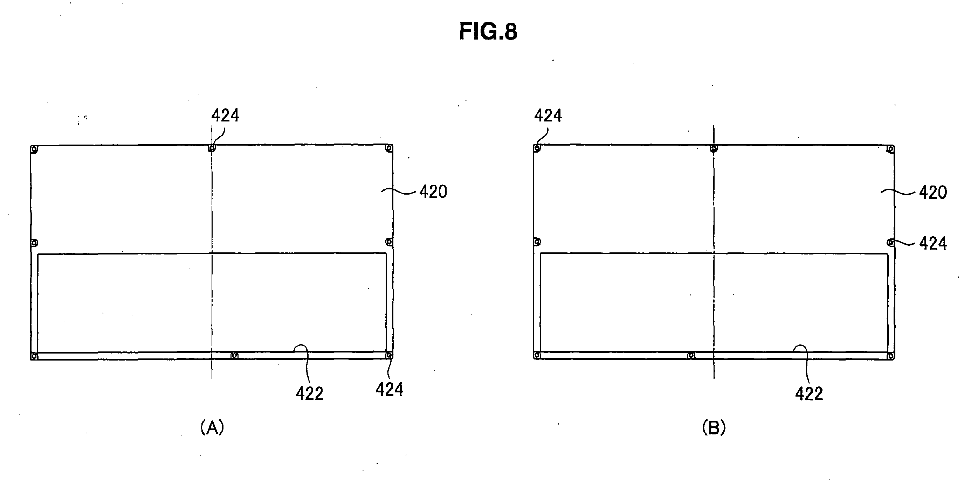

FIG. 8 is a schematic view showing the configuration of the rear cover 420. FIG. 8(A) is a front view showing the rear cover 420 when the rear cover 420 is seen from the front of the display unit 300. FIG. 8(B) is a back view showing the rear cover 420 when the rear cover 420 is seen from the back of the display unit 300.

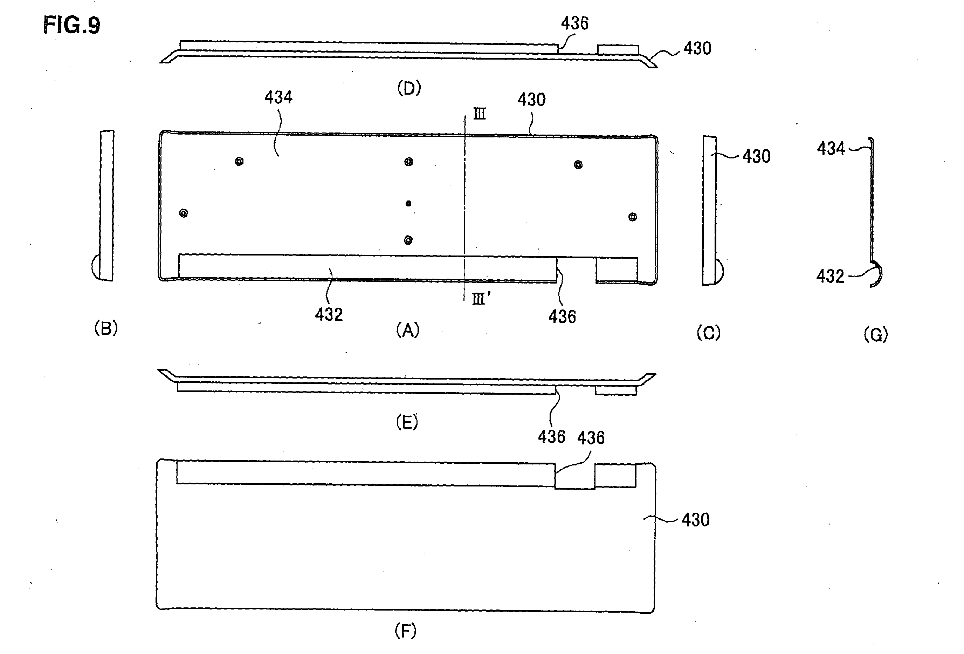

FIG. 9 is a schematic view showing the configuration of the T cover 430. FIG. 9(A) is a front view showing the T cover 430 when the T cover 430 is seen from the front of the display unit 300. FIG. 9(B) is a left side view. FIG. 9(C) is a right side view. FIG. 9(D) is a top view. FIG. 5(E) is a bottom view. FIG. 9(F) is a back view. FIG. 9(G) is a cross sectional view taken along an alternate long and short dashed line III-III' in FIG. 9(A)

As shown in FIG. 8, the rear cover 420 is arranged with an opening 422 at a portion corresponding to the positions of the base plate 340, the T substrate 350, and the hinge unit 360. Further, the rear cover 420 is arranged with penetrating holes 424 into which screws for fixing the rear cover 420 are inserted. As described later, the rear cover 420 is fixed to the bezel 310 to cover the upper portion of the back surface of the organic EL panel 320.

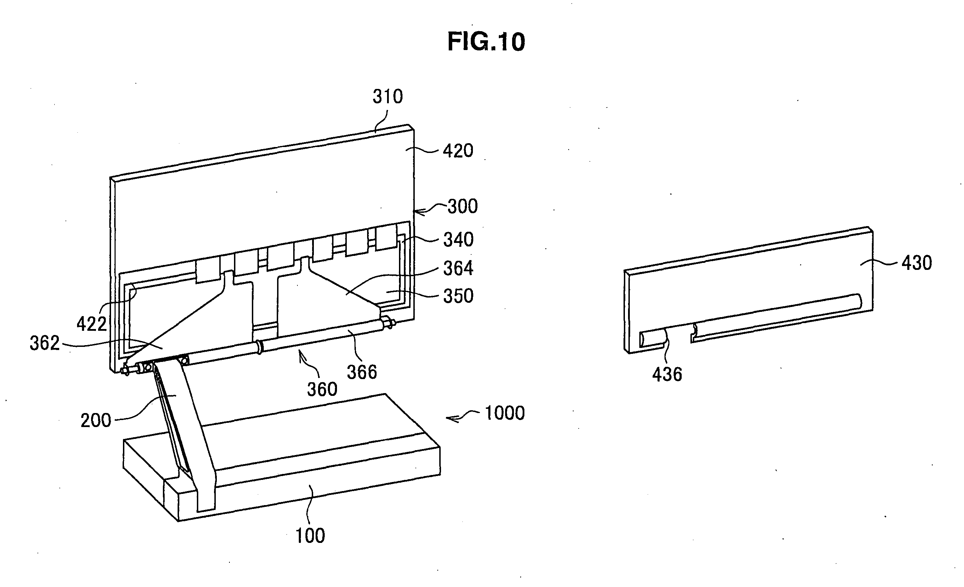

FIG. 10 shows the display apparatus 1000 from which the T cover is removed when the display apparatus 1000 is seen from the back. The base plate 340, the T substrate 350, and the hinge unit 360 are arranged on the area of the lower side of the display unit 300. When the T cover 430 is removed, the T substrate 350 and the hinge unit 360 are exposed to the outside via the opening 422 of the rear cover 420.

As shown in FIG. 9, the T cover 430 is arranged with: a concave portion 432 corresponding to the shaft 366 of the hinge unit 360; and a concave portion 434 corresponding to an area in which the base plate 340, the T substrate 350, the first hinge plate 362, and the second hinge plate 364 are arranged. Further, the T cover 430 is arranged with a notch 436 at the position corresponding to the arm unit 200.

When the rear cover 420 is covered by the T cover 430, the shaft 366 is accommodated in the concave portion 432, and the T substrate 350, the first hinge plate 362, and the second hinge plate 364 are accommodated in the concave portion 434. As a result, as shown in FIG. 1(B), constituent members such as the T substrate 350 and the hinge unit 360 are covered by the T cover 430. Further, the arm unit 200 protrudes toward the back through the notch 436.

Therefore, on the back of the display unit 300, only the rear cover 420, the T cover 430, and the arm unit 200 are exposed to the outside to make a very simple and sophisticated external appearance. In particular, on the upper side of the display unit 300, constituent members related to the thickness are mainly three members, i.e., the organic EL panel 320, the graphite sheet 330, and the rear cover 420. Therefore, the very thin display unit 300 producing a sense of floating and lightness can be made. Further, the base plate 340 serves as a stiffening member for the display unit 300, and the major constituent elements of the display unit 300 are fixed to the base plate 340. Therefore, the display unit 300 which is very thin but has sufficient strength can be made.

### [Configuration of the Hinge Unit]

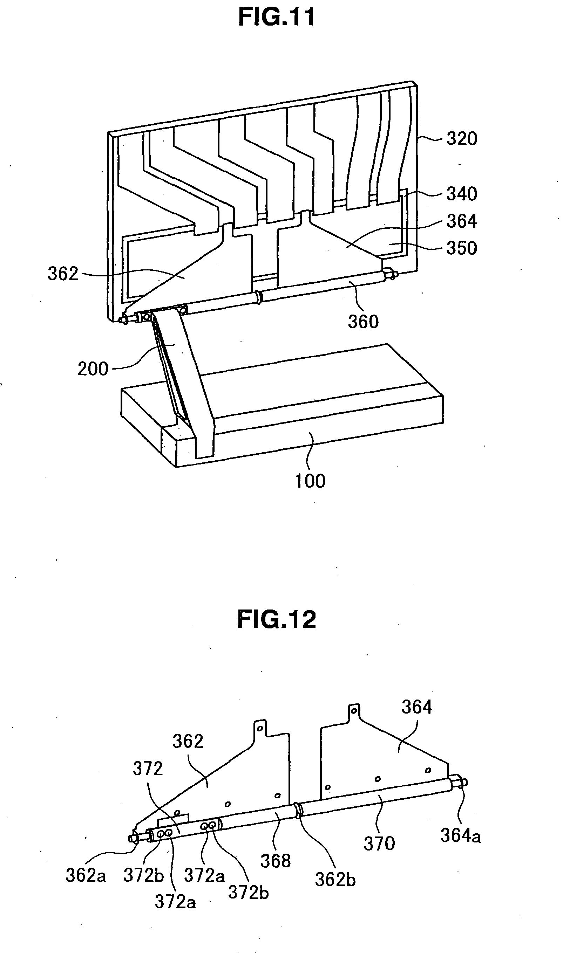

FIG. 11 is a figure showing the display apparatus 1000 when the display apparatus 1000 is seen from the back. In FIG. 11, members such as the rear cover 420 and the bezel 310 are removed from the display apparatus 1000 of FIG. 10. FIG. 12 is a perspective view showing the configuration of the hinge unit 360.

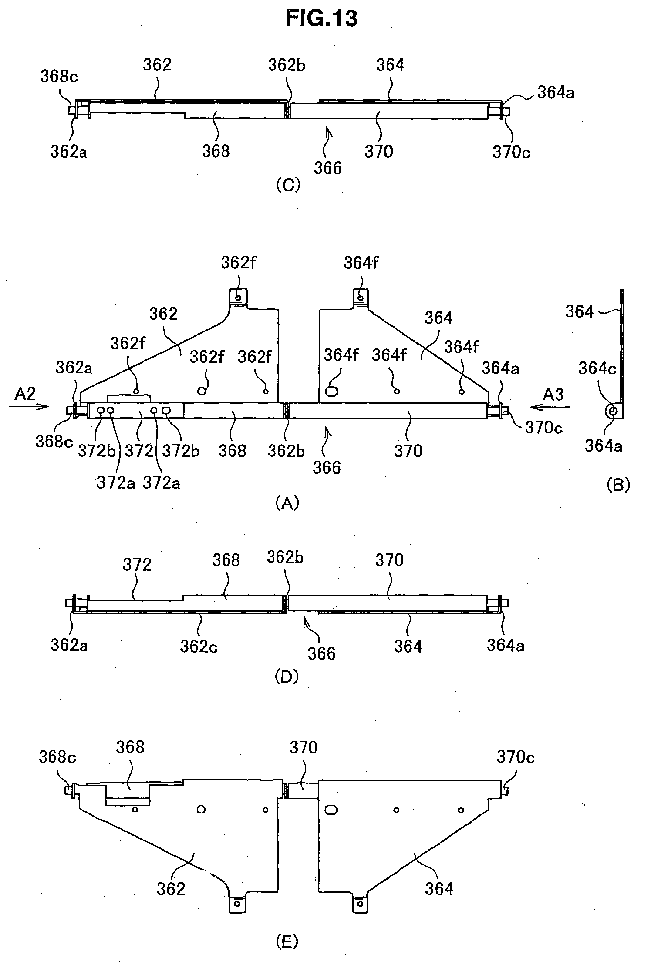

FIG. 13 is a schematic view showing the configuration of the hinge unit 360 in detail. FIG. 13(A) is a front view of the hinge unit 360 when the hinge unit 360 is seen from the back of the display unit 300. FIG. 13(B) is a right side view. FIG. 13(C) is a top view. FIG. 13(D) is a bottom view. FIG. 13(E) is a back view.

The shaft 366 of the hinge unit 360 is fixed to the arm unit 200. As shown in FIG. 4, at the upper end of the arm unit 200, a receiving surface 202 to which the shaft 366 is attached is arranged. The receiving surface 202 is arranged with bosses 202a and holes 202b.

Further, as shown in FIG. 12, a flat surface 372 is arranged on a portion of an external periphery of the shaft 366. The flat surface 372 is arranged with holes 372a into which the bosses 202a of the receiving surface 202 of the arm unit 200 is inserted. Further, on the flat surface 372, screw holes 372b are arranged at the positions corresponding to the holes 202b.

The flat surface 372 contacts the receiving surface 202 of the arm unit 200, and the bosses 202a are inserted into the holes 372a. In this state, screws are inserted into the holes 202b from the back of the arm unit 200, and are screwed into the screw holes 372b, so that the shaft 366 is fixed to the arm unit 200. As a result, as shown in FIG. 11, the shaft 366 of the hinge unit 360 and the arm unit 200 are joined. The shaft 366 and the arm unit 200, which are joined, serve as a stiffening member for supporting the display unit 300.

The shaft 366 is arranged horizontally along the lower side of the display unit 300. The first hinge plate and the second hinge plate 364 are engaged with the shaft 366 so as to be pivotable about the shaft 366 as an axis of pivoting.

As shown in FIG. 13(A), the first hinge plate 362 is arranged with a plurality of holes 362f. Further, the second hinge plate 364 is arranged with a plurality of holes 364f. These holes 362f and 364f correspond to the positions of the screw holes 342 of the base plate 340. When the screws inserted into the holes 362f and 364f are screwed into the holes 342 of the base plate 340, the first hinge plate 362 and the second hinge plate 364 are fixed to the base plate 340 with the T substrate 350 being placed between the first hinge plate 362 and the second hinge plate 364 and the base plate 340. As a result, the first hinge plate 362 and the second hinge plate 364 as well as the base plate 340 serve as strength members for securing the stiffness of the display unit 300.

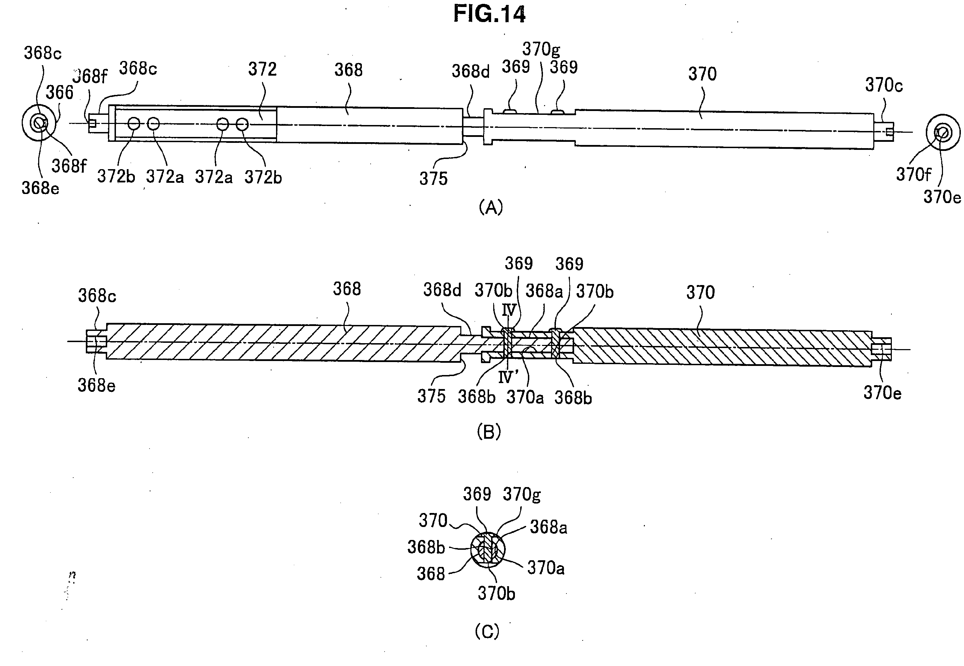

FIG. 14 is a schematic view showing the configuration of the shaft 366 in detail. FIG. 14(A) shows a front view, a right side view, and a left side view showing the shaft 366 when the shaft 366 is seen from the back of the display unit 300. FIG. 14(B) shows a cross section taken along the central axis of the shaft 366. FIG. 14(C) shows a cross section taken along an alternate long and short dashed line IV-IV' in FIG. 14(A).

As shown in FIG. 14, the shaft 366 is divided at an intermediate portion, and the shaft 366 includes two shafts 368 and 370. The above flat surface 372 is arranged on the shaft 368.

As shown in FIGS. 14(A) and 14(B), a groove 375 is arranged at a portion where the shaft 368 and the shaft 370 are connected. An engaging shaft 368a to be inserted into an engaging hole 370a of the shaft 370 is arranged at an end of the shaft 368. A flat surface 370g is arranged at an end of the shaft 370.

As shown in FIG. 14(B), the engaging shaft 368a of the shaft 368 is arranged with two holes 368b into which pins 369 are inserted. A portion of the shaft 370 where the flat surface 370 is formed is arranged with two holes 370b into which the pins 369 are inserted.

The pins 369 are inserted into the holes 368b and the holes 370b with the engaging shaft 368a being inserted into the engaging hole 370a, and the pins 369 are crimped, so that the shaft 368 and the shaft 370 are fixed. In this occasion, the crimping causes the external diameter of the pins 369 to be fitted into the internal diameter of the holes 368b and the holes 370b, so that they are fixed.

As shown in FIG. 14(A), an engaging shaft 368c is arranged at an end of the shaft 368 opposite to the engaging shaft 368a. An engaging shaft 368d is arranged at the position of the shaft 375. The engaging shaft 368c is arranged with a hole 368e having a predetermined depth along the central axis. An engaging groove 368f having a predetermined depth is arranged on a portion of an end surface of the engaging shaft 368c.

Similarly, an engaging shaft 370c is arranged at an end of the shaft 370. The engaging shaft 370c is arranged with a hole 370e having a predetermined depth along the central axis. An engaging groove 370f having a predetermined depth is arranged on a portion of an end surface of the engaging shaft 370c.

As shown in FIGS. 12 and 13, at both ends of the first hinge plate 362, two engaging portions 362a and 362b for engaging with the engaging shafts 368c and 368d at both ends of the shaft 368 are arranged through bending processing. Each of the engaging portions 362a and 362b are arranged with a penetrating hole 362c (not shown in FIGS. 12 and 13).

At one end of the second hinge plate 364, one engaging portion 364a for engaging with the engaging shaft 370c at the end of the shaft 370 is arranged through bending processing. As shown in FIG. 13(B), the engaging portion 364a is arranged with a penetrating hole 364c.

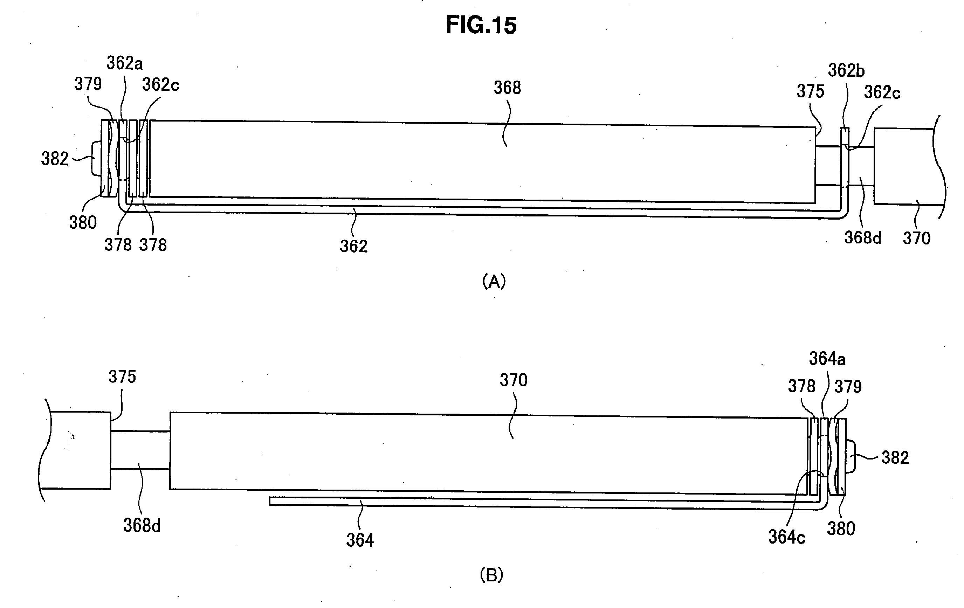

FIG. 15 is a schematic view showing an engagement state among the first hinge plate 362, the second hinge plate 364, and the shaft 366. FIG. 15 shows the shaft 366 when the shaft 366 is seen from the below of the display unit 300. FIG. 15(A) shows the first hinge plate 362 pivotably attached to the shaft 366. FIG. 15(B) shows the second hinge plate 364 pivotably attached to the shaft 366.

As shown in FIG. 15(A), the engaging shaft 368c of the shaft 368 is inserted into the penetrating hole 362c of the engaging portion 362a of the first hinge plate 362 with a washer 378 being put on the engaging shaft 368c. Further, the engaging shaft 368d is inserted into the penetrating hole 362c of the engaging portion 362b. A lock position limiting plate 380 is attached to the end of the engaging shaft 368c with a spring washer 379 being put on the engaging shaft 368c, and a crimp pin 382 is knocked into the hole 368e, so that the crimp pin 382 is fixed to the hole 368e. As a result, the lock position limiting plate 380 is fixed to the end surface of the engaging shaft 368c, the first hinge plate 362 is pivotably attached to the shaft 368.

As shown in FIG. 15(B), the engaging shaft 370c is inserted into the penetrating hole 364c of the engaging portion 364a of the second hinge plate 364 with the washer 378 being put on the engaging shaft 370c, and further, the spring washer 379 is put on the engaging shaft 370c. Then, the lock position limiting plate 380 is attached to the end of the engaging shaft 370c, and a crimp pin 382 is knocked into the hole 370e, so that the crimp pin 382 is fixed to the hole 370e. As a result, the lock position limiting plate 380 is fixed to the end surface of the engaging shaft 370c, the second hinge plate 364 is pivotably attached to the shaft 370.

To assemble the hinge unit 360, firstly, the engaging shaft 368d of the shaft 368 is inserted into the penetrating hole 362c of the engaging portion 362b of the first hinge plate 362 with the shaft 366 being divided into the shaft 368 and the shaft 370. Next, the washer 378 is put on the engaging shaft 368c, and the engaging shaft 368c is inserted into the penetrating hole 362c of the engaging portion 362a.

Next, the engaging shaft 368a of the shaft 368 is inserted into the engaging hole 370a of the shaft 370, and the pins 369 are inserted into the holes 368b and the holes 370b. Then, the pins 369 are crimped, so that the shaft 368 and the shaft 370 are fixed and joined. As a result, the groove 375 is formed between the shaft 368 and the shaft 370, and the engaging portion 362b is engaged with the engaging shaft 368d in the groove 375.

Next, the washer 378 is put on the engaging shaft 370c of the shaft 370, and the engaging shaft 370c is inserted into the penetrating hole 364c of the engaging portion 364a of the second hinge unit 364. Then, the spring washers 379 are put on the engaging shaft 368c and the engaging shaft 370c at both ends of the shaft 366, the lock position limiting plate 380 is attached to the end surfaces of the engaging shaft 368c and the engaging shaft 370c. The crimp pins 382 are inserted into the hole 368e and the hole 370e, and the crimp pins are crimped.

The engaging holes 362c of the engaging portions 362a and 362b arranged at the two positions of the first hinge plate 362 are pivotably engaged with the engaging shafts 368c and 368d at both ends of the shaft 368, so that the first hinge plate 362 is supported so as to be pivotable about the shaft 366. The engaging hole 364c of the engaging portion 364a arranged at the one position of the second hinge plate 364 is pivotably engaged with the engaging shaft 370c at the one end of the shaft 370, so that the second hinge plate 364 is supported so as to be pivotable about the shaft 366. Therefore, both of the first hinge plate 362 and the second hinge plate 364 are pivotably attached to the shaft 366.

Therefore, when the first hinge plate 362 and the second hinge plate 364 are attached to the base plate 340, the display unit 300 can be supported so as to be pivotable about the shaft 366, i.e., the stiffening member, serving as a central axis of pivoting.

In the present embodiment, two hinge plates, i.e., the first hinge plate 362 and the second hinge plate 364, are supported so as to be pivotable about the shaft 366, but one hinge plate may be pivotably supported. It should be noted that, when the shaft 366 is long, and one hinge plate is configured to be pivotably supported at engaging portions arranged on both ends of the one hinge plate, the hinge plate may deform in a direction away from the shaft at an intermediate portion in the longitudinal direction of the shaft 366. Further, the hinge plate may twist in a pivoting direction, and the pivoting angle positions at both ends of the hinge plate may become different, so that the hinge plate may not smoothly pivot. In contrast, in the present embodiment, the hinge plate is divided into the two hinge plates, i.e., the first hinge plate 362 and the second hinge plate 364, and the two engaging portions 362a and 362b are arranged at both ends of the first hinge plate 362, so that the number of the engaging portions of the entire hinge plate for engaging with the shaft 366 increases to three, and the hinge plate is prevented from deforming in a direction away from the shaft at the near intermediate portions of the shaft 366. Further, since the hinge plate is divided, the stiffness of each of the hinge plates improves, and the hinge plate is prevented from twisting. Accordingly, the pivoting angel positions of the first hinge plate 362 and the second hinge plate 368 at both ends of the shaft 366 can be made the same. Therefore, the first hinge plate 362 and the second hinge plate 368 can smoothly pivot relative to the shaft 366, and the tilt operation of the display unit 300 can be performed smoothly.

### [Pivoting Lock Mechanism of the Hinge Plate]

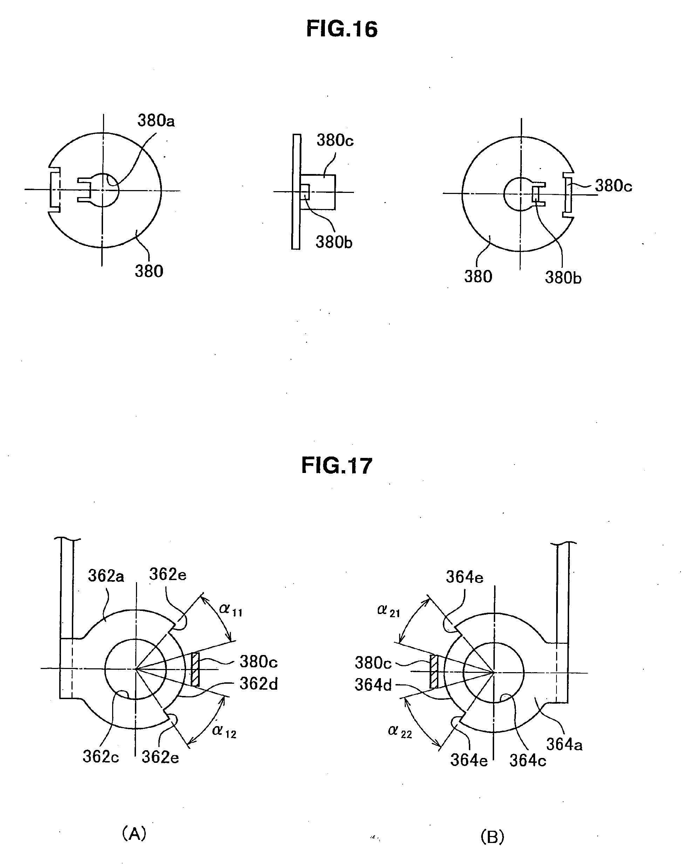

FIG. 16 is a schematic view showing the configuration of the lock position limiting plate 380. The lock position limiting plate 380 is formed by pressing a planar material. As shown in FIG. 16, the lock position limiting plate 380 is arranged with: a hole 380a into which the crimp pin 382 is inserted; a protrusion 380b for engaging with the engaging grooves 368f and 370f at the ends of the engaging shafts 368c and 370c; and a protrusion 380c for limiting pivoting lock positions of the first hinge plate 362 and the second hinge plate 364.

FIG. 17 is a schematic view showing how the pivoting positions of the first hinge plate 362 and the second hinge plate 364 are limited by the protrusion 380c of the lock position limiting plate 380. FIG. 17(A) shows the engaging portion 362a of the first hinge plate 362 when the engaging portion 362a is seen from a direction indicated by an arrow A2 in FIG. 13(A). FIG. 17(B) shows the engaging portion 364a of the second hinge plate 364 when the engaging portion 364a is seen from a direction indicated by an arrow A3 in FIG. 13 (A).

As shown in FIG. 17(A), a concave portion 362d is formed on the outline of the engaging portion 362a of the first hinge plate 362. When the protrusion 380b is inserted into the engaging groove 368f, and the lock position limiting plate 380 is attached to the end of the engaging shaft 368c, the protrusion 380c of the lock position limiting plate 380 is configured to be positioned at the concave portion 362d. Therefore, when the first hinge plate 362 pivots about the central axis of the shaft 366 as the center of pivoting, end surfaces 362e on both sides of the concave portion 362d come into contact with the protrusion 380c, thereby limiting the pivotable range of the first hinge plate 362. Therefore, the lock position limiting plate 380, the engaging groove 368f, the end surfaces 362e of the engaging portion 362a, the protrusion 380b, and the protrusion 380c constitute a pivotable range limiting unit for limiting the pivotable range of the first hinge plate 362.

Similarly, as shown in FIG. 17(B), a concave portion 364d is formed on the outline of the engaging portion 364a of the second hinge plate 364. When the protrusion 380b is inserted into the engaging groove 368f, and the lock position limiting plate 380 is attached to the end of the engaging shaft 370c, the protrusion 380c of the lock position limiting plate 380 is configured to be positioned in the concave portion 364d. Therefore, when the second hinge plate 364 pivots about the central axis of the shaft 366 as the center of pivoting, end surfaces 364e on both sides of the concave portion 364d come into contact with the protrusion 380c, thereby limiting the pivotable range of the second hinge plate 364. Therefore, the lock position limiting plate 380, the engaging groove 370f, the end surfaces 364e of the engaging portion 364a, the protrusion 380b, and the protrusion 380c constitute the pivotable range limiting unit for limiting the pivotable range of the second hinge plate 364.

Herein, the angular range between the two end surfaces 362e of the concave portion 362d of the first hinge plate 362 is configured to be the same as the angular range between the two end surfaces 364e of the concave portion 364d of the second hinge plate 364. Further, as shown in FIG. 14(A), relative angular positions of the shaft 368 and the shaft 370 are limited by a pin 369, so that the engaging grooves 368f and 370f limiting the angular position of the lock position limiting plate 380 are positioned at the same angular position about the shaft 366 as the central axis. Therefore, the angular position of the protrusion 380c relative to the two end surfaces 362e of the concave portion 362d is the same as the angular position of the protrusion 380c relative to the two end surfaces 364e of the concave portion 364d. Therefore, as shown in FIGS. 17(A) and 17(B), when the display unit 300 is tilted upward under a condition that the pivotable angle of the first hinge plate 362 is α11 and the pivotable angle of the second hinge plate 364 is a12, a relationship of α11=α12 is satisfied. When the display unit 300 is tilted downward under a condition that the pivotable angle of the first hinge plate 362 is a12 and the pivotable angle of the second hinge plate 364 is a22, a relationship of α12=α22 is satisfied.

Therefore, when the display unit 300 is tilted upward or downward, the position where the tilting is locked is the same between both of the first hinge plate 362 and the second hinge plate 364. As a result, since the tilt position can be locked at both ends of the shaft 366 at the same time, a twist between the display unit 300 and the shaft 366 can be reliably prevented when the tilt position is locked in the structure for supporting the display unit 300 in a cantilever manner. Therefore, at the lock position, the upper side of the display unit 300 is prevented from slanting with respect to the central axis of the shaft 366, and the display unit 300 can move smoothly.

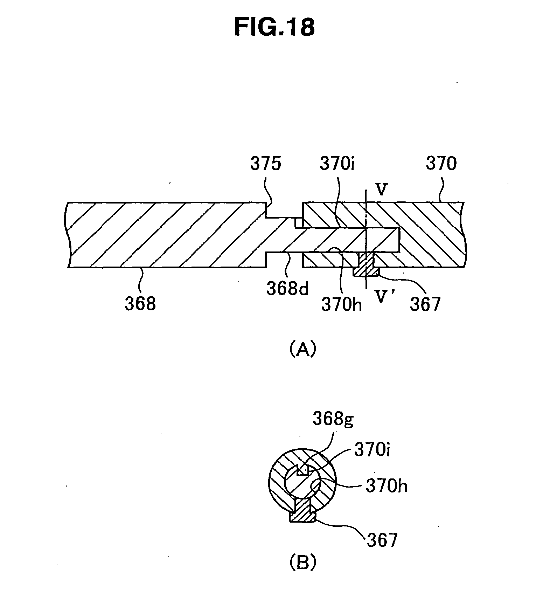

FIG. 18 is a schematic view showing another example of the configuration for connecting the shaft 368 and the shaft 370. FIG. 18(A) shows a cross section taken along the central axis of the shaft 366. FIG. 18(B) is a schematic diagram showing a cross section taken along an alternate long and short dashed line V-V' in FIG. 18(A). In the example of FIG. 18, an engaging shaft 368d of the shaft 368 is inserted into a hole 370h of the shaft 370, so that a key 370i of the hole 370h and a key groove 368g of the engaging shaft 368d are engaged with each other, and thereby, the angular positions of the shaft 368 and the shaft 370 are limited. A crimp pin 367 for fixing is crimped to the shaft 370, so that the shaft 368 is prevented from pulling out of the shaft 370. With such configuration, the angular positions of the engaging groove 368f of the shaft 368 and the engaging groove 370f of the shaft 370 can be limited, so that the position where the tilt position is locked can be made the same between both of the first hinge plate 362 and the second hinge plate 364. Further, although not shown in the figures, the cross section of the engaging shaft 368d of the shaft 368 may be in a D shape, and the hole 370h of the shaft 370 may be a hole in the D shape to engage with the engaging shaft 368d. With such configuration, the engaging shaft 368d can be reliably engaged with the hole 370h, so that the shaft 368 and the shaft 370 are connected in such a manner that the shaft 368 and the shaft 370 cannot pivot relative to each other.

### [Configuration of the Main Body Stand Unit]

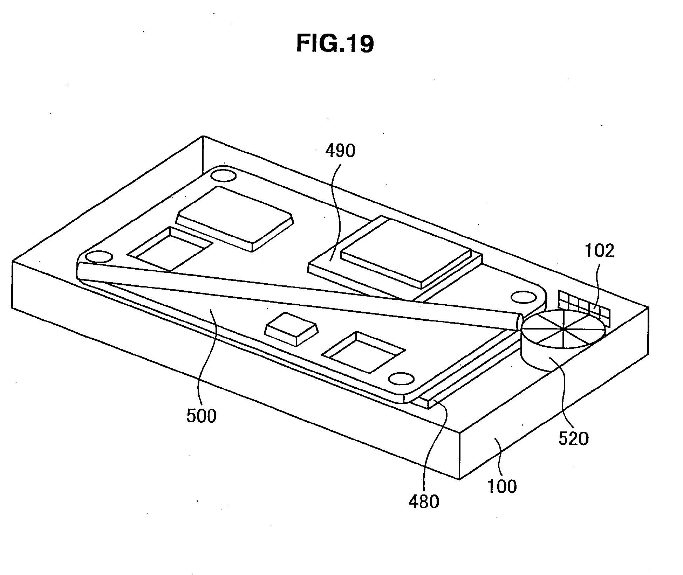

FIG. 19 is an exploded schematic view showing the schematic configuration of the main body stand unit 100. FIG. 19 shows the main body stand unit 100 from which a cover on the upper surface is removed. The body of the main body stand unit 100 is made of metal. A circuit board (O board) 480 for performing a signal processing for driving the display unit 300, a circuit board (B-CAS board) 490, a cooling fan 520, a radiator (heat spreader) 500, and the like are arranged in the main body stand unit 100 in a compact manner. The main body stand unit 100 has various terminals such as tuners for satellite broadcast (BS, CS) and digital terrestrial television, LAN, HDMI, and USB, and has a rod antenna 104 (see FIG. 1(B)) for receiving digital terrestrial television on the back side. Further, the main body stand unit 100 has a speaker box, operation buttons, and the like.

It should be understood by those skilled in the art that various modifications, combinations, sub-combinations and alterations may occur depending on design requirements and other factors insofar as they are within the scope of the appended claims or the equivalents thereof.

## Claims

1. A display apparatus comprising:
a main body stand unit;
a display panel in a planar shape arranged with a display screen;
at least one hinge plate connected to a back surface of the display panel;
a shaft arranged to extend along a lower end portion of the display panel, wherein the hinge plate is pivotably attached to a central axis of the shaft;
a support unit, wherein an upper end of the support unit is connected to the shaft, and a lower end of the support unit is connected to the main body stand unit, so that the support unit supports the display panel in a cantilever manner; and
a pivotable range limiting unit arranged at each of both end portions of the shaft for limiting a pivotable range of the hinge plate evenly at the both end portions.

2. The display apparatus according to claim 1, wherein the pivotable range limiting unit includes:
an contact unit which contacts the hinge plate to limit the pivotable range of the hinge plate; and
a positioning unit being engaged with the shaft at the both end portions of the shaft to limit an angular position of the contact unit relative to the shaft.

3. The display apparatus according to claim 2, wherein the hinge plate is divided into at least two or more hinge plates.

4. The display apparatus according to claim 3, wherein the shaft includes at least two or more divided shafts so as to correspond to the divided hinge plates, and
the divided shafts are connected to each other in such a manner that the divided shafts cannot pivot about the central axis of the shaft.
